# FASCICULE DE BREVET EUROPEEN

(11) **EP 0 921 469 B1**
(45) Date de publication et mention de la délivrance du brevet: **09.12.2009**
(21) Numéro de dépôt: 98403014.8
(22) Date de dépôt: 02.12.1998
(51) Int. Cl.: G06F 12/02

(54) **Procédé de gestion des ressources de mémoire dans une carte à microcircuit**
Verfahren zur Verwaltung von Speichermitteln in einer Chipkarte
Method for managing memory resources in a chip card

(30) Priorité: 03.12.1997 FR 9715213
(43) Date de publication de la demande: 09.06.1999
(73) Titulaire: OBERTHUR TECHNOLOGIES, 92300 Levallois-Perret (FR)
(72) Inventeur: Chamley, Olivier, 33650 Cabanac (FR); Soussana, Isaac-Jacques, 92100 Boulogne (FR)
(74) Mandataire: Santarelli

(56) Documents cités:
- EP-A- 0 282 787
- FR-A- 2 613 851
- US-A- 4 912 629
- US-A- 5 159 678

## Description

L'invention se rapporte à la gestion des ressources de mémoire dans une carte à microcircuit, plus communément appelée carte à puce ; elle concerne plus particulièrement un perfectionnement permettant de réallouer des espaces de mémorisation en confiant au système d'exploitation de la carte la tâche de récupérer la mémoire allouée, que ce soit en mémoire vive (habituellement mémoire volatile de type "RAM") ou en mémoire morte reprogrammable (habituellement mémoire non volatile modifiable de type "E² PROM" ou "FLASH").

Dans les cartes à microcircuit, les ressources de mémoire, bien qu'elles augmentent progressivement grâce à de nouveaux composants plus performants, sont relativement limités. Il devient néanmoins possible et intéressant d'effectuer des allocations dynamiques de mémoire. Cependant, il est préférable de ne pas laisser la libération des espaces de mémorisation déjà alloués à l'initiative du programmeur en raison des erreurs de programmation possibles et du code additionnel que cela nécessiterait. Ce dernier résiderait alors dans les applications et non dans le système d'exploitation de la carte ; il consommerait éventuellement de la mémoire morte reprogrammable, ressource rare et précieuse dans la carte.

On connaît, par la publication US 4 912 629, un procédé général de gestion d'une mémoire structurée en liste chaînée de cellules mémoires. A chaque cellule est prévue un compteur du nombre de chaînons pointant sur cette cellule. Lorsque ce nombre est nul, c'est-à-dire que la cellule mémoire n'appartient plus à la liste chaînée, elle peut être réallouée.

Pour éviter les inconvénients susmentionnés, l'invention propose de confier au système d'exploitation de la carte, la tâche de gérer la mémoire allouée en vue de récupérer les unités de mémorisation précédemment allouées sur demande des moyens d'exécution du programme mais devenue inutile pour la suite du déroulement de celui-ci.

Plus précisément, l'invention concerne donc un procédé défini par la revendication 1.

Une référence peut être un pointeur (direct ou indirect) désignant dans le programme ou dans un sous-programme tel ou tel espace de mémorisation. Ainsi, une caractéristique de l'invention consiste à mémoriser dans chaque entête, le nombre de références qui font appel à l'espace de mémorisation correspondant et à actualiser ce nombre. Lorsque l'espace de mémorisation est défini, cela signifie que le programme ou un sous-programme a demandé sa constitution. Son nombre de références est donc égal à un. Puis, d'autres parties de programme ou sous-programme peuvent avoir besoin du même espace de mémorisation, moyennant quoi le nombre de références peut augmenter. En revanche, si par exemple un sous-programme arrive à sa fin, tous les espaces de mémorisation auxquels il a fait appel voient leur nombre de références décrémenté d'une unité. Par conséquent, le nombre de références d'un espace de mémorisation peut être ramené à zéro. Dans ce cas, l'invention permet de le réallouer, sous certaines conditions, lors d'une nouvelle demande d'allocation.

La réallocation ne peut se faire (sauf à la fin du chaînage) que si l'espace de mémorisation est plus grand ou de préférence égal à la nouvelle demande. Pour conserver la continuité du chaînage, il y a lieu de créer une nouvelle entête en cas de réallocation, permettant d'avoir accès à la partie non réallouée de l'espace de mémorisation.

D'autres aspects de l'invention permettent de gérer au mieux l'évolution de ces espaces de mémorisation. Par exemple, il faut éviter, autant que faire se peut, la création d'espaces de mémorisation qui, quoique devenus disponibles, ont un nombre d'unités de mémorisation trop petit pour avoir une chance d'être réalloués. Ceci peut être obtenu par le type de procédure de réallocation retenu, comme on le verra plus loin. En outre, le procédé de l'invention prévoit aussi de fusionner des espaces de mémorisation lorsqu'ils sont adjacents dans ledit chaînage et que leurs nombres de références ont tous été ramenés à zéro. On attribue alors une nouvelle entête unique au nouvel espace de mémorisations résultant d'une telle fusion. Ce processus de fusionnement (on parle aussi de défragmentation) permet de limiter la persistance d'espaces de mémorisation trop petits. Plusieurs procédures permettant de fusionner des espaces de mémorisation adjacents susceptibles d'être réalloués seront décrits plus loin.

L'invention sera mieux comprise et d'autres avantages de celle-ci apparaîtront plus clairement à la lumière de la description qui va suivre d'un procédé de gestion des ressources de mémoire dans une carte à microcircuit conforme à son principe, donnée uniquement à titre d'exemple et faite en référence aux dessins annexés dans lesquels:
- la figure 1 est un schéma illustrant l'agencement de la totalité des ressources de mémoire disponibles dans la carte à microcircuit ;
- la figure 2 est un schéma de principe illustrant le chaînage des allocations dynamiques d'espaces de mémorisation et les références du programme et des sous-programmes qui font appel à celles-ci, à un moment donné ; et
- la figure 3 représente la structure d'une partie de l'entête d'un espace de mémorisation alloué.

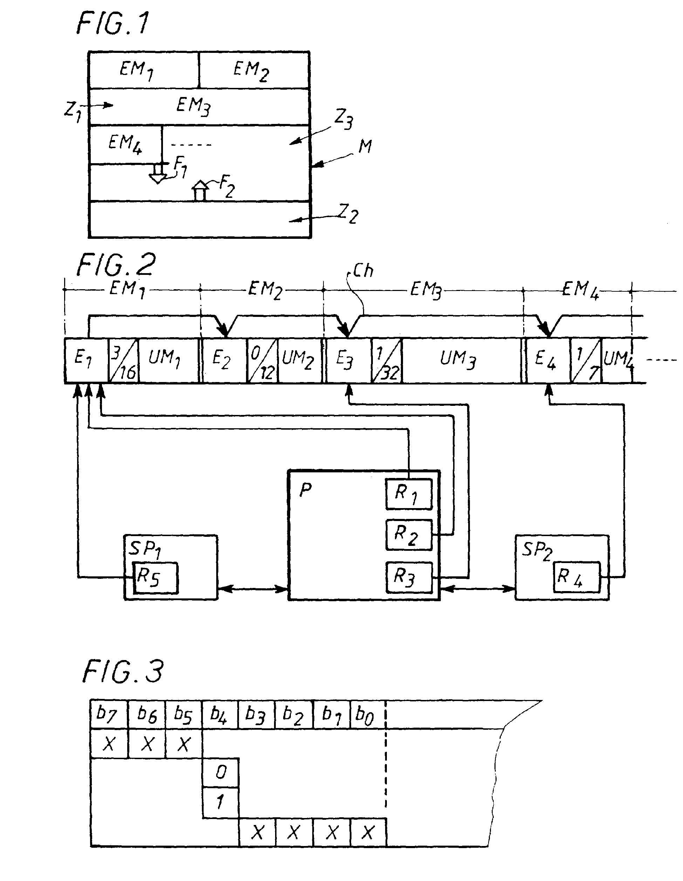

En considérant plus particulièrement la figure 1, M désigne l'ensemble des ressources de mémoire dans une carte à microcircuit ou "carte à puce". On sait qu'une telle carte se compose d'un support en matière plastique semi-rigide, le plus souvent rectangulaire, comportant une cavité abritant un microcircuit dont certains accès sont reliés à des plages de raccordement métalliques agencées à la surface de la carte, au voisinage de la cavité, pour permettre le raccordement du microcircuit à un appareil tel qu'un distributeur de billets de banque, un téléphone portable, un décodeur de télévision, etc... Le raccordement permet de commander le déroulement d'un programme spécifique, en rapport avec le service envisagé. Les plages de contact peuvent être remplacées par une antenne permettant l'échange d'informations avec le microcircuit ; elles peuvent aussi coexister avec une telle antenne.

Les ressources de mémoire sont partagées en trois parties variables. D'un côté, on définit la zone des allocations "dynamiques" Z₁ dont la gestion fait plus particulièrement l'objet de l'invention. Cette zone Z₁ est ici définie en partant des adresses "hautes" vers le bas. D'un autre côté, c'est-à-dire en partant des adresses "basses" vers le haut, on définit une zone des allocations "systèmes" Z₂ utilisée pour d'autres fonctionnalités d'allocations. Entre ces deux zones, subsiste une zone Z₃ disponible à la fois pour accroître les allocations "dynamiques" et les allocations "systèmes". Autrement dit, la zone Z₁ peut s'étendre dans le sens de la flèche F₁ (adresses décroissantes) au détriment de la zone Z₃ et la zone Z₂ peut s'étendre dans le sens la flèche F₂ (adresses croissantes) au détriment de la zone Z₃ . Les zones Z₁ et Z₂ peuvent donc se rencontrer, auquel cas un signal d'erreur indiquant l'absence de mémoire disponible est élaboré. L'invention permet de réduire le risque d'apparition d'un tel évènement.

Sur la figure 2, on voit comment sont organisés les espaces de mémorisation EM₁ , EM₂ .... EM₄ .... de la zone Z₁ dite des allocations dynamiques. Chaque espace de mémorisation comprend une entête E_{1,} E₂, E₃, E₄ ... et un certain nombre d'unités de mémorisation UM₁ , UM₂, UM₃, UM₄ ... correspondantes. Chaque entête renferme notamment des informations sur le nombre de références requérant l'espace de mémorisation correspondant, à un moment donné et sur le nombre d'unités de mémorisation que comprend cet espace de mémorisation. On voit en effet sur la figure 2 que les espaces de mémorisation EM₁, EM₂ ... EM₄ ... sont désignés par des références R₁, R₂, R₃ d'un programme et par des références R₄, R₅ de sous-programmes SP₁ et SP₂, ceci à titre d'exemple. Plus précisément, l'espace EM₁ est ici désigné par les références R₁ et R₂ du programme P et par la référence R₅ du sous-programme SP₁. Son nombre de références (indiqué en haut et à gauche dans l'entête de la figure 2) est donc égal à 3. Il comporte ici 16 unités de mémorisation (comme indiqué en bas et à droite dans la même entête). L'espace EM₂ dont le nombre d'unités de mémorisation est égal à 12 ne fait plus l'objet d'aucune allocation ; son nombre de références est donc égal à 0. L'espace EM₃ dont le nombre d'unités de mémorisation est égal à 32 est désigné par la référence R₂ du programme P et seulement par celle-ci, son nombre de références est donc égal à 1. L'espace de mémorisation EM₄ dont le nombre d'unités de mémorisation est 7 est désigné par la référence R₄ du sous-programme SP₂ et seulement par celle-ci. Son nombre de références est donc égal à 1.

En d'autres termes, le nombre de références inscrit dans l'entête d'un espace de mémorisation représente le nombre de relations injectives établies à un moment donné entre le programme ou un sous-programme et l'espace de mémorisation correspondant.

On réalise par ailleurs un chaînage Ch entre toutes les entêtes E₁, E₂, E₃, E₄ ... de la zone des allocations dynamiques Z₁. Si le nombre de références de l'un des espaces de mémorisation (ici EM₂) est ramené à 0, cela signifie qu'aucune partie du programme ou sous-programme n'est susceptible, à l'avenir, de le consulter et/ou de le modifier. Par conséquent, cet espace de mémorisation peut être réalloué, si cela est possible, lorsqu'une nouvelle demande d'allocation est formulée par le système.

La figure 3 illustre de façon plus précise la façon dont est organisé l'entête d'un espace de mémorisation. Cette dernière, qui permet d'assurer le chaînage s'étend sur deux ou trois octets. Sur le premier octet, les bits b₅, b₆ et b₇ indiquent le type de l'espace de mémorisation alloué, le bit b₄ indique que la longueur de l'espace de mémorisation est codé sur un octet ou sur deux octets (selon sa valeur) et les bits b₀ à b₃ représentent le nombre de références de l'espace de mémorisation considéré. Lorsque ce nombre est nul, cela indique que l'espace de mémorisation peut être réalloué. Ce premier octet est ensuite suivi d'un ou deux octets (non représentés) indiquant le nombre d'unités de mémorisation compris dans cet espace de mémorisation (y compris les octets de l'entête) puis des données inscrites dans l'espace de mémorisation en question.

Ainsi, en se référant à nouveau à l'exemple de la figure 2, si une nouvelle allocation de 10 octets, par exemple, est demandée, on pourra lui affecter l'espace de mémorisation EM₂, disponible, en codant la longueur sur un octet, ceci sans qu'il soit nécessaire de créer une nouvelle entête dans le chaînage. Une allocation de 9 octets pourra être satisfaite dans les mêmes conditions mais en codant le nombre d'unités de mémorisation sur deux octets. Une allocation d'un nombre inférieur d'unités de mémorisation nécessitera de créer une nouvelle entête dans le chaînage Ch, pour assurer la continuité de ce dernier et avoir accès, le cas échéant, aux unités de mémorisation résultant du fractionnement intervenu au moment de la réallocation de l'espace de mémorisation EM₂.

En revanche, une allocation de plus de 10 octets ne pourra se faire, dans l'exemple de la figure 2, qu'en empiétant sur la zone Z₃ et en complétant le chaînage par une entête E₅ définissant un espace de mémorisation EM₅.

Par conséquent, il apparaît que les conditions nécessaires pour qu'une réallocation soit possible sont les suivantes:
- Il doit exister un espace de mémorisation dont le nombre de références a été ramené à 0,
- Un nouvel espace de mémorisation doit être demandé par les moyens d'exécution du programme et le nombre d'unités de mémorisation dudit nouvel espace de mémorisation doit être inférieur ou égal au nombre d'unités de mémorisation de l'espace de mémorisation existant et susceptible d'être réalloué.

Selon un autre aspect de l'invention, pour éviter la subsistance d'espaces de mémorisation trop petits et dont la probabilité d'être réalloués est faible, on fusionne des espaces de mémorisation lorsqu'il sont adjacents dans ledit chaînage Ch et que leurs nombres de références ont tous été ramenés à 0. La fusion s'accompagne de la création d'une nouvelle entête correspondant au nouvel espace de mémorisation résultant de ladite fusion. Ainsi, en reprenant l'exemple de la figure 2, en supposant que l'espace de mémorisation EM₂ soit toujours disponible, si la référence R₃ cesse de pointer l'espace de mémorisation EM₃, le nombre de références contenues dans son entête E₃ est ramené à 0. Par conséquent, les deux espaces de mémorisation EM₂ et EM₃, adjacents dans le chaînage Ch peuvent être fusionnés en un seul espace de mémorisation comportant 44 octets, y compris ceux qui constituent la nouvelle entête de celui-ci. Si, dans le même temps, c'est-à-dire avant une nouvelle demande de réallocation, la référence R₄ cesse de pointer l'espace de mémorisation EM₄, c'est l'ensemble des espaces de mémorisation EM₂, EM₃ et EM₄ qu'il est possible de fusionner en un bloc unique de 51 octets, comportant une seule entête. Dans ce cas, puisque l'espace de mémorisation EM₄ est le dernier de la zone Z₁, le bas de la zone Z₁ peut alors être déplacé de 51 octets vers le haut, au profit de l'élargissement de la zone Z₃.

Plusieurs critères peuvent être choisis pour décider du moment où on va tenter de réaliser une fusion de plusieurs espaces de mémorisation adjacents, à des moments privilégiés du déroulement du programme. Par exemple, lorsque le nombre de références d'un espace de mémorisation est ramené à 0, on peut tester aussitôt si l'un des deux espaces de mémorisation adjacents comporte déjà un nombre de références égal à 0 et, dans l'affirmative, on peut fusionner ces deux espaces de mémorisation et modifier aussitôt le chaînage en créant une nouvelle entête remplaçant les deux précédentes.

Il est aussi possible de parcourir le chaînage à certains moments choisis et de relever systématiquement la valeur du nombre de références de chaque entête. On fusionne alors des espaces de mémorisation adjacents si leurs nombres de références sont ramenés à 0. Par exemple, on peut parcourir le chaînage en vue de fusionner des espaces de mémorisation adjacents à la fin de l'exécution d'un sous-programme puisque, lorsque cela est le cas, toutes les références qu'il contient cessent de pointer sur les espaces de mémorisation correspondants et que les nombres de références de ceux-ci sont tous décrémentés simultanément. La fin d'un sous-programme est donc une circonstance où plusieurs nombres de références peuvent être ramenés à 0 simultanément.

Un autre critère peut être la diminution de la zone Z₃, c'est-à-dire l'espace mémoire disponible non compris dans le chaînage. Lorsque cet espace mémoire non alloué atteint une valeur limite inférieure prédéterminée, on peut déclencher une procédure de recherche de fusionnement des espaces de mémorisation adjacents dans le chaînage Ch, en parcourant spécialement celui-ci pour rechercher les espaces de mémorisation adjacents dont les nombres de références sont ramenés à 0.

Par ailleurs, indépendamment de ce processus de fusionnement (défragmentation) des espaces de mémorisation de la zone Z₁ des allocations dynamiques, on peut définir plusieurs façons de réallouer un espace de mémorisation disponible. Ainsi, lorsqu'une demande d'allocation est formulée, on peut réallouer un espace de mémorisation disponible (par exemple EM₂ en considérant la figure 2) dès lors qu'il comporte un nombre d'unités de mémorisation suffisant pour satisfaire la demande d'allocation concomitante. Par conséquent, on arrête de parcourir le chaînage dès que l'on trouve un espace de mémorisation de dimensions suffisantes et on modifie les entêtes du chaînage pour tenir compte de cette réallocation.

Pour éviter la création d'espaces de mémorisation résiduels trop petits, on peut décider de ne réallouer un espace de mémorisation au cours du parcours dudit chaînage que si celui-ci comporte un nombre d'unités de mémorisation égal à celui du nouvel espace de mémorisation demandé. En cas de succès, on peut alors arrêter aussitôt le parcours du chaînage. Comme ce type de réallocation risque d'être relativement rare, on peut le combiner, au cours du parcours du chaînage, avec la mémorisation de l'entête de l'espace de mémorisation dont le nombre d'unités de mémorisation excède le moins celui de l'espace de mémorisation demandé. On réalloue alors un tel espace de mémorisation, s'il existe, à la fin du parcours dudit chaînage en créant une nouvelle entête dans celui-ci, correspondant au nombre d'unités de mémorisation restantes. Si ce nombre d'unités de mémorisation restantes est trop faible, on peut aussi décider de ne pas réallouer cet espace de mémorisation libre mais d'allouer un nouvel espace à la fin de la zone Z₁.

On peut également prendre une option inverse, c'est-à-dire mémoriser, au cours du parcours du chaînage, l'entête de l'espace de mémorisation dont le nombre d'unités de mémorisation excède le plus celui de l'espace de mémorisation demandé et réallouer un tel espace de mémorisation, s'il existe, à la fin du parcours du chaînage en créant une nouvelle entête dans celui-ci, correspondant au nombre d'unités de mémorisation restantes. L'espace de mémorisation résiduel, relativement grand, aura plus de chances d'être réalloué ultérieurement. Là encore, on peut décider de ne pas réallouer l'espace de mémorisation ainsi sélectionné si le nombre d'unités de mémorisation restantes est trop faible.

En règle générale, dès lors qu'aucun espace de mémorisation susceptible d'être réalloué, (c'est-à-dire comportant un nombre d'unités de mémorisation suffisant ou simplement convenable compte tenu de la procédure de sélection choisie) n'est détecté en parcourant le chaînage en présence d'une demande d'allocation, on alloue un espace de mémorisation supplémentaire (c'est-à-dire à la suite de EM₄ en considérant la figure 2) et on complète le chaînage par une entête supplémentaire correspondante.

Par ailleurs, s'il existe un grand nombre de références pointant sur un espace de mémorisation particulier, c'est-à-dire si le nombre de références mémorisé dans l'entête de ce dernier atteint une valeur maximum prédéterminée, on peut décider d'allouer définitivement cet espace de mémorisation.

Il est à noter en outre que, statistiquement, le dernier espace de mémorisation du chaînage se libère souvent avant qu'une nouvelle demande d'allocation soit formulée. Dans ce cas, il est intéressant de réallouer en priorité au moins une partie des unités de mémorisation du dernier espace de mémorisation qui vient d'être libéré. En effet, si le nombre d'unités de mémorisation demandé est inférieur à celui du dernier espace de mémorisation qui vient d'être libéré, alors les unités de mémorisation excédentaires feront partie de la zone Z₃ et il ne sera pas nécessaire de créer une nouvelle entête. Ces unités de mémorisation excédentaires seront réallouées ultérieurement en fonction d'une ou plusieurs demandes d'allocations subséquentes.

Inversement, si la demande d'allocation porte sur un plus grand nombre d'unités de mémorisation que n'en comporte ledit espace de mémorisation, il suffit de compléter celui-ci par des unités de mémorisation supplémentaires adjacentes appartenant à la zone Z₃ pour obtenir l'espace de mémorisation requis.

## Revendications

1. Procédé de gestion des ressources de mémoire dans une carte à microcircuit comprenant notamment des mémoires volatiles et/ou non volatiles modifiables et des moyens d'exécution d'un programme, **caractérisé en ce qu'**on alloue des espaces de mémorisation au fur et à mesure des demandes des moyens d'exécution, chaque espace (EM1 ... EM4) comprenant une entête (E1 ... E4) et un nombre d'unités de mémorisation (UM1 ... UM4) correspondant à la demande desdits moyens d'exécution,
**en ce qu'**on organise, dans chaque entête, une mise à jour d'un nombre de références représentatif, à un moment donné de l'exécution du programme ou de sous-programmes, d'une pluralité de telles références prévues dans le programme ou les sous-programmes et requérant, à ce moment donné, les informations de l'espace de mémorisation correspondant,
**en ce qu'**on organise un chaînage (Ch) desdites entêtes, susceptible d'être parcouru, et
**en ce qu'**on réalloue un espace de mémorisation existant si son nombre de références a été ramené à zéro, si un nouvel espace de mémorisation est demandé et si le nombre d'unités de mémorisation dudit nouvel espace de mémorisation est inférieur ou égal au nombre d'unités de mémorisation dudit espace de mémorisation existant.

2. Procédé selon la revendication 1, **caractérisé en ce qu'**on fusionne des espaces de mémorisation lorsqu'ils sont adjacents dans ledit chaînage et que leurs nombres de référence ont tous été ramenés à zéro et **en ce qu'**on attribue une nouvelle entête au nouvel espace de mémorisation résultant d'une telle fusion.

3. Procédé selon la revendication 2, **caractérisé en ce que**, lorsque le nombre de références d'un espace de mémorisation (EM2) est ramené à zéro, on teste si un espace de mémorisation adjacent comporte déjà un nombre de références égal à zéro et, dans l'affirmative, on fusionne ces espaces de mémorisation.

4. Procédé selon la revendication 2, **caractérisé en ce qu'**à certains moments, on parcourt ledit chaînage (Ch) en relevant notamment la valeur dudit nombre de références de chaque entête et **en ce qu'**on fusionne des espaces de mémorisation adjacents si leurs nombres de références sont ramenés à zéro.

5. Procédé selon la revendication 4, **caractérisé en ce qu'**on parcourt ledit chaînage en vue de fusionner des espaces de mémorisation adjacents à la fin de l'exécution d'un sous-programme (SP1, SP2).

6. Procédé selon la revendication 4 ou 5, **caractérisé en ce qu'**on parcourt ledit chaînage en vue de fusionner des espaces de mémorisation adjacents lorsque l'espace mémoire (Z3) non alloué atteint une limite inférieure prédéterminée.

7. Procédé selon l'une des revendications précédentes, **caractérisé en ce qu'**on parcourt ledit chaînage et **en ce qu'**on réalloue un espace de mémorisation disponible s'il comporte un nombre d'unités de mémorisation suffisant pour satisfaire une demande d'allocation concomitante.

8. Procédé selon la revendication 7, **caractérisé en ce qu'**on réalloue un espace de mémorisation au cours du parcours dudit chaînage dès lors que celui-ci comporte un nombre d'unités de mémorisation égal à celui du nouvel espace de mémorisation demandé.

9. Procédé selon la revendication 7 ou 8, **caractérisé en ce qu'**on parcourt entièrement ledit chaînage (Ch) en vue d'une réallocation, **en ce qu'**on mémorise l'entête de l'espace de mémorisation dont le nombre d'unités de mémorisation excède le moins celui de l'espace de mémorisation demandé et **en ce qu'**on réalloue un tel espace de mémorisation, s'il existe, à la fin du parcours dudit chaînage en créant une nouvelle entête dans celui-ci, correspondant au nombre d'unités de mémorisation restantes.

10. Procédé selon la revendication 7 ou 8, **caractérisé en ce qu'**on parcourt entièrement ledit chaînage (Ch) en vue d'une réallocation éventuelle, **en ce qu'**on mémorise l'entête de l'espace de mémorisation dont le nombre d'unités de mémorisation excède le plus celui de l'espace de mémorisation demandé et **en ce qu'**on réalloue un tel espace de mémorisation, s'il existe, à la fin du parcours dudit chaînage en créant une nouvelle entête dans celui-ci, correspondant au nombre d'unités de mémorisation restantes.

11. Procédé selon l'une des revendications 7 à 10, **caractérisé en ce qu'**on alloue un espace de mémorisation supplémentaire dès lors qu'aucun espace de mémorisation susceptible d'être réalloué et comportant un nombre d'unités de mémorisation suffisant n'est détecté en parcourant ledit chaînage, en présence d'une demande d'allocation et **en ce qu'**on complète ledit chaînage par une entête supplémentaire correspondante.

12. Procédé selon l'une des revendications précédentes, **caractérisé en ce qu'**on alloue définitivement un espace de mémorisation si le nombre de références correspondant a atteint une valeur maximum prédéterminée.

13. Procédé selon l'une des revendications précédentes, **caractérisé en ce qu'**on réalloue en priorité au moins une partie des unités de mémorisation du dernier espace de mémorisation (EM4) dans ledit chaînage, si son nombre de références a été ramené à zéro avant l'élaboration d'une autre demande d'allocation.

14. Procédé selon la revendication 13, **caractérisé en ce que**, en cas de réallocation dudit dernier espace de mémorisation (EM4) on complète celui-ci par des unités de mémorisation supplémentaires adjacentes si ladite autre demande d'allocation porte sur un plus grand nombre d'unités de mémorisation que n'en comporte ledit dernier espace de mémorisation.

15. Procédé selon la revendication 13, **caractérisé en ce que**, lorsque ladite autre demande d'allocation porte sur un plus petit nombre d'unités de mémorisation que celui que comporte ledit dernier espace de mémorisation, on réalloue les unités de mémorisation excédentaires en fonction d'une ou plusieurs demandes d'allocation subséquentes à ladite autre demande d'allocation.

## Claims

1. Process for managing the memory resources in a microcircuit card comprising in particular alterable volatiles and/or non-volatile memories and means for running a program, **characterised in that** storage spaces are allocated as requests are made for running means, each space (EM1 ... EM4) comprising a header (E1 ... E4) and a number of storage units (UM1 ... UM4) corresponding to the request for said running means;
**in that** updating a number of references representative, at a given moment of running of the program or of sub-programs, of a plurality of these references provided in the program or the sub-programs and requesting at this given moment data of the corresponding storage space, is organised in each header;
**in that** chaining (Ch) of said headers, capable of being scanned is organised; and
**in that** an existing storage space is reallocated if its number of references has been reduced to zero, if a new storage space is requested and if the number of storage units of said new storage space is less than or equal to the number of storage units of said existing storage space.

2. Process according to claim 1, **characterised in that** storage spaces are merged when they are adjacent in said chaining and numbers of references of the storage spaces have all been reduced to zero and **in that** a new header is assigned to the new storage space resulting from the merge.

3. Process according to claim 2, **characterised in that**, when the number of references of a storage space (EM2) has been reduced to zero, a check is made to ascertain whether an adjacent storage space already includes a number of references equal to zero and, if it does, these storage spaces are merged.

4. Process according to claim 2, **characterised in that**, at some times, said chaining (Ch) is scanned, in particular recording the value of said number of references of each header and **in that** adjacent storage spaces are merged if their numbers of references have been reduced to zero.

5. Process according to claim 4, **characterised in that** said chaining is scanned in order to merge adjacent storage spaces after running a sub-program (SP1, SP2).

6. Process according to claim 4 or 5, **characterised in that** said chaining is scanned in order to merge adjacent storage spaces when the non-allocated storage space (Z3) reaches a predetermined lower limit.

7. Process according to one of the preceding claims, **characterised in that** said chaining is scanned and **in that** an available storage space is re-allocated if it includes a sufficient number of storage units to satisfy a concomitant allocation request.

8. Process according to claim 7, **characterised in that** a storage space is re-allocated during the scanning of said chaining as soon as the latter includes a number of storage units equal to that of the new storage space requested.

9. Process according to claim 7 or 8, **characterised in that** said chaining (Ch) is completely scanned for the purposes of re-allocation, **in that** the header of the storage space the number of storage units of which least exceeds that of the storage space requested is stored and **in that** such a storage space, if it exists, is re-allocated after scanning of said chaining, by creating a new header in the re-allocated storage space corresponding to the number of storage units remaining.

10. Process according to claim 7 or 8, **characterised in that** said chaining (Ch) is completely scanned for the purposes of possible re-allocation, **in that** the header of the storage space the number of storage units of which most exceeds that of the storage space requested is stored and **in that** such a storage space, if it exists, is re-allocated after scanning of said chaining, by creating a new header in the re-allocated storage space corresponding to the number of storage units remaining.

11. Process according to one of claims 7 to 10, **characterised in that** an additional storage space is allocated as soon as no storage space capable of being re-allocated and including a sufficient number of storage units is detected when scanning said chaining, in the presence of an allocation request, and **in that** said chaining is completed by means of a corresponding additional header.

12. Process according to one of the preceding claims, **characterised in that** a storage space is permanently allocated if the corresponding number of references has reached a predetermined maximum value.

13. Process according to one of the preceding claims, **characterised in that** at least some of the storage units of the last storage space (EM4) in said chaining are re-allocated as a priority if its number of references has been reduced to zero before another allocation request is prepared.

14. Process according to claim 13, **characterised in that**, if said last storage space (EM4) is re-allocated, it is completed by means of adjacent additional storage units if said other allocation request relates to a larger number of storage units than is included by said last storage space.

15. Process according to claim 13, **characterised in that**, when said other allocation request relates to a smaller number of storage units than is included by said last storage space, the excess storage units are re-allocated as a function of one or more allocation requests subsequent to said other allocation request.

## Patentansprüche

1. Verfahren für das Management von Speicher-Ressourcen auf einer Mikroschaltungskarte, die insbesondere flüchtige und/oder modizierbare nichtflüchtige Speicher sowie Mittel zum Ausführen eines Programms enthält,
**dadurch gekennzeichnet, dass** Speicherräume nach Maßgabe der Anforderungen der Ausführungsmittel zugewiesen werden, wobei jeder Raum (EM1, ..., EM4) einen Kopf (E1., ..., E4) und eine Anzahl Speichereinheiten (UM1, ..., UM4) enthält, die der Anforderung der Ausführungsmittel entspricht,
dass in jedem Kopf zu einem gegebenen Zeitpunkt der Ausführung des Programms oder der Unterprogramme eine Aktualisierung einer repräsentativen Anzahl von Bezugnahmen einer Mehrzahl solcher Bezugnahmen, die in dem Programm oder in den Unterprogrammen vorgesehen sind und zu diesem gegebenen Zeitpunkt die Informationen über den entsprechenden Speicherraum anfordern, organisiert wird,
dass eine Verknüpfung (Ch) der Köpfe, die durchlaufen werden kann, organisiert wird und
dass ein vorhandener Speicherraum neu zugewiesen wird, falls seine Anzahl von Bezugnahmen auf Null zurückgestellt worden ist, falls ein neuer Speicherraum angefordert wird und falls die Anzahl von Speichereinheiten des neuen Speicherraums kleiner oder gleich der Anzahl von Speichereinheiten des vorhandenen Speicherraums ist.

2. Verfahren nach Anspruch 1, **dadurch gekennzeichnet, dass** Speicherräume verschmolzen werden, wenn sie in der Verknüpfung benachbart sind und wenn ihre jeweilige Anzahl von Bezugnahmen vollständig auf Null zurückgestellt worden ist, und dass dem neuen Speicherraum, der sich aus einer solchen Verschmelzung ergibt, ein neuer Kopf zugewiesen wird.

3. Verfahren nach Anspruch 2, **dadurch gekennzeichnet, dass** dann, wenn die Anzahl von Bezugnahmen eines Speicherraums (EM2) auf Null zurückgestellt worden ist, getestet wird, ob ein benachbarter Speicherraum bereits eine Anzahl von Bezugnahmen, die gleich Null ist, enthält, wobei im positiven Fall diese Speicherräume verschmolzen werden.

4. Verfahren nach Anspruch 2, **dadurch gekennzeichnet, dass** die Verknüpfung (Ch) zu bestimmten Zeitpunkten durchlaufen wird, wobei insbesondere der Wert der Anzahl von Bezugnahmen jedes Kopfes erhöht wird, und dass benachbarte Speicherräume verschmolzen werden, falls ihre jeweilige Anzahl von Bezugnahmen auf Null zurückgestellt worden ist.

5. Verfahren nach Anspruch 4, **dadurch gekennzeichnet, dass** die Verknüpfung durchlaufen wird, um benachbarte Speicherräume am Ende der Ausführung eines Unterprogramms (SP1, SP2) zu verschmelzen.

6. Verfahren nach Anspruch 4 oder 5, **dadurch gekennzeichnet, dass** die Verknüpfung durchlaufen wird, um benachbarte Speicherräume zu verschmelzen, wenn der nicht zugewiesene Speicherraum (Z3) eine vorgegebene untere Grenze erreicht.

7. Verfahren nach einem der vorhergehenden Ansprüche, **dadurch gekennzeichnet, dass** die Verknüpfung durchlaufen wird und dass ein verfügbarer Speicherraum neu zugewiesen wird, falls er eine Anzahl von Speichereinheiten enthält, die ausreicht, um eine begleitende Zuweisungsanforderung zu erfüllen.

8. Verfahren nach Anspruch 7, **dadurch gekennzeichnet, dass** ein Speicherraum im Verlauf des Durchgangs durch die Verknüpfung neu zugewiesen wird, sobald er eine Anzahl von Speichereinheiten enthält, die gleich jener des neuen angeforderten Speicherraums ist.

9. Verfahren nach Anspruch 7 oder 8, **dadurch gekennzeichnet, dass** die Verknüpfung (Ch) im Hinblick auf eine erneute Zuweisung vollständig durchlaufen wird, dass der Kopf des Speicherraums, dessen Anzahl von Speichereinheiten am wenigsten jene des angeforderten Speicherraums übersteigt, gespeichert wird und dass ein solcher Speicherraum, sofern vorhanden, am Ende des Durchgangs durch die Verknüpfung neu zugewiesen wird, indem darin ein neuer Kopf erzeugt wird, der der Anzahl verbleibender Speichereinheiten entspricht.

10. Verfahren nach Anspruch 7 oder 8, **dadurch gekennzeichnet, dass** die Verknüpfung (Ch) im Hinblick auf eine eventuelle erneute Zuweisung vollständig durchlaufen wird, dass der Kopf des Speicherraums, dessen Anzahl von Speichereinheiten am meisten jene des angeforderten Speicherraums übersteigt, gespeichert wird und dass ein solcher Speicherraum, sofern vorhanden, am Ende des Durchgangs durch die Verknüpfung neu zugewiesen wird, indem darin ein neuer Kopf erzeugt wird, der der Anzahl verbliebener Speichereinheiten entspricht.

11. Verfahren nach einem der Ansprüche 7 bis 10, **dadurch gekennzeichnet, dass** ein zusätzlicher Speicherraum zugewiesen wird, sobald beim Durchgang durch die Verknüpfung kein Speicherraum erfasst werden kann, der neu zugewiesen werden kann und der eine ausreichende Anzahl von Speichereinheiten enthält, wenn eine Zuweisungsanforderung vorhanden ist, und dass die Verknüpfung durch einen entsprechenden zusätzlichen Kopf vervollständigt wird.

12. Verfahren nach einem der vorhergehenden Ansprüche, **dadurch gekennzeichnet, dass** ein Speicherraum endgültig zugewiesen wird, falls die entsprechende Anzahl von Bezugnahmen einen vorgegebenen maximalen Wert erreicht hat.

13. Verfahren nach einem der vorhergehenden Ansprüche, **dadurch gekennzeichnet, dass** wenigstens ein Teil der Speichereinheiten des letzten Speicherraums (EM4) in der Verknüpfung mit Priorität neu zugewiesen wird, falls seine Anzahl von Bezugnahmen auf Null zurückgestellt worden ist, bevor eine andere Zuweisungsanforderung bearbeitet worden ist.

14. Verfahren nach Anspruch 13, **dadurch gekennzeichnet, dass** im Fall einer erneuten Zuweisung des letzten Speicherraums (EM4) jener durch benachbarte zusätzliche Speichereinheiten vervollständigt wird, falls sich die andere Zuweisungsanforderung auf eine größere Anzahl von Speichereinheiten stützt als der letzte Speicherraum enthält.

15. Verfahren nach Anspruch 13, **dadurch gekennzeichnet, dass** dann, wenn sich die andere Zuweisungsanforderung auf eine kleinere Anzahl von Speichereinheiten als jene stützt, die der letzte Speicherraum enthält, die überzähligen Speichereinheiten als Funktion einer oder mehrerer Zuweisungsanforderungen, die der anderen Zuweisungsanforderung nachfolgen, neu zugewiesen werden.
